# EUROPEAN PATENT SPECIFICATION

(11) **EP 2 947 993 B1**
(45) Date of publication and mention of the grant of the patent: **16.11.2016**
(21) Application number: 14703429.2
(22) Date of filing: 14.01.2014
(51) Int. Cl.: A21C 9/06

(54) **FEEDER DEVICE FOR FEEDING A FOOD PRODUCT IN A MACHINE FOR MAKING FILLED PASTA AND MACHINE FOR MAKING FILLED PASTA COMPRISING SUCH A FEEDER DEVICE**
ZUFÜHRVORRICHTUNG ZUM ZUFÜHREN EINES NAHRUNGSMITTELPRODUKTES ZU EINER MASCHINE ZUR HERSTELLUNG VON GEFÜLLTEN TEIGWAREN UND MASCHINE ZUR HERSTELLUNG VON GEFÜLLTEN TEIGWAREN MIT SOLCH EINER ZUFÜHRVORRICHTUNG
DISPOSITIF D'ALIMENTATION POUR ALIMENTER PAR UN PRODUIT ALIMENTAIRE UNE MACHINE DE FABRICATION DE PÂTES FARCIES ET MACHINE DE FABRICATION DE PÂTES FARCIES COMPRENANT CE DISPOSITIF D'ALIMENTATION

(30) Priority: 23.01.2013 IT BO20130028
(43) Date of publication of application: 02.12.2015
(73) Proprietor: G.D S.p.A., 40133 Bologna (IT)
(72) Inventor: BERTUZZI, Ivanoe, 40033 Casalecchio di Reno (Bologna) (IT); ZANETTI, Umberto, 41100 Modena (IT); BIONDI, Andrea, 40133 Bologna (IT)
(74) Representative: Puggioli, Tommaso
(86) International application number: PCT/IB2014/058254
(87) International publication number: WO 2014/115058

(56) References cited:
- EP-A2- 1 295 528
- WO-A1-2011/146442
- CA-A1- 2 286 524
- FR-A- 1 445 077
- US-A- 2 227 728

## Description

### Technical field

This invention relates to a feeder device for feeding a food product in a machine for making filled pasta and the machine comprising such a device.

In particular, this invention relates to a feeder device for feeding a filling, to which explicit reference will be made without thereby limiting the scope of the invention, in a machine for making filled pasta such as tortellini, tortelloni or ravioli.

Hereinafter in this description reference is made, by way of example and for simplicity, to a device of the above-mentioned type operating in a machine for making filled pasta without thereby limiting the scope of the invention.

### Background art

In prior art machines for making filled pasta at least one strip of pasta sheet is usually fed towards a filling operation station in which suitable portions of filling are wrapped in the pasta strip to form individual pieces of filled pasta.

Machines for making filled pasta comprise a feeder device for feeding the filling to the filling operation station.

The feeder device for feeding the filling comprises, in an example embodiment, a duct, forming a feed cylinder, comprising an inlet for receiving the filling, and an outlet leading to the filling operation station, substantially at the strip of pasta sheet.

Moreover, prior art feeder devices comprise an actuator, for example pneumatic, with a piston or rod inserted in the feed cylinder for pushing out of it the individual portions or doses of filling towards the filling operation station.

Document CA2286524 relates to a machine for making stuffed pastas, such as ravioli, where the pasta comprises a filling, such as meat or cheese, between two pieces of dough.

The disclosed machine comprises a surface provided with a plurality of dough receptacles for supporting a first sheet of dough and an expandable or inflatable bladder for acting on the first sheet of dough for pressing the sheet of dough into the recesses for creating a pre-formed pocket of dough in said recess.

The machine comprise filler material injection system for injecting an amount of filler material into the pre-formed pocket of dough and a second dough support system for supporting a second sheet of dough and for contacting the second sheet with the first sheet for covering the pre-formed pocket.

One disadvantage of prior art feeder devices for feeding the filling, in particular in the case of semi-liquid, sticky or pasty filling, derives from the fact that at the outlet of the duct aggregates of filling form which remain attached to the duct.

More precisely, the action of the piston causes build-ups of filling on the outlet of the feed cylinder.

Such build-ups remain attached to the duct where, in general, they dry, losing their organoleptic and hygienic properties, making it necessary to stop and clean the entire machine.

Moreover, the dose moved by the piston does not completely reach the filling operation station, leading to uncertainty regarding the quantity of filling actually inserted in each individual piece of filled pasta made.

### Disclosure of the invention

In this context, the main technical purpose of this invention is to propose a feeder device for feeding a filling in a machine for making filled pasta, and a machine for making filled pasta which are free of the above-mentioned disadvantages.

One aim of this invention is to propose a feeder device for feeding a filling which allows precise dosing of the filling.

Another aim of this invention is to propose a dosing device for dosing the filling in machines for making filled pasta which does not require regular machine stops for cleaning and maintenance.

The technical purpose indicated and the aims specified are substantially achieved by a feeder device for feeding a food product, in particular filling, according to claim 1, and by a machine for making filled pasta according to claim 5.

### Brief description of drawings

Further features and advantages of this invention are more apparent in the description below, with reference to a preferred, non-limiting embodiment of a machine for making filled pasta as illustrated in the accompanying drawings, in which:
- Figure 1 is a schematic side view partly in cross-section, partly in blocks and with some parts cut away for greater clarity, of a machine for making filled pasta comprising a feeder device according to this invention;
- Figure 2 is a schematic side view partly in cross-section, partly in blocks and with some parts cut away for greater clarity and with the feeder device in a second operating configuration, of the machine for making filled pasta of Figure 1.

### Detailed description of preferred embodiments of the invention

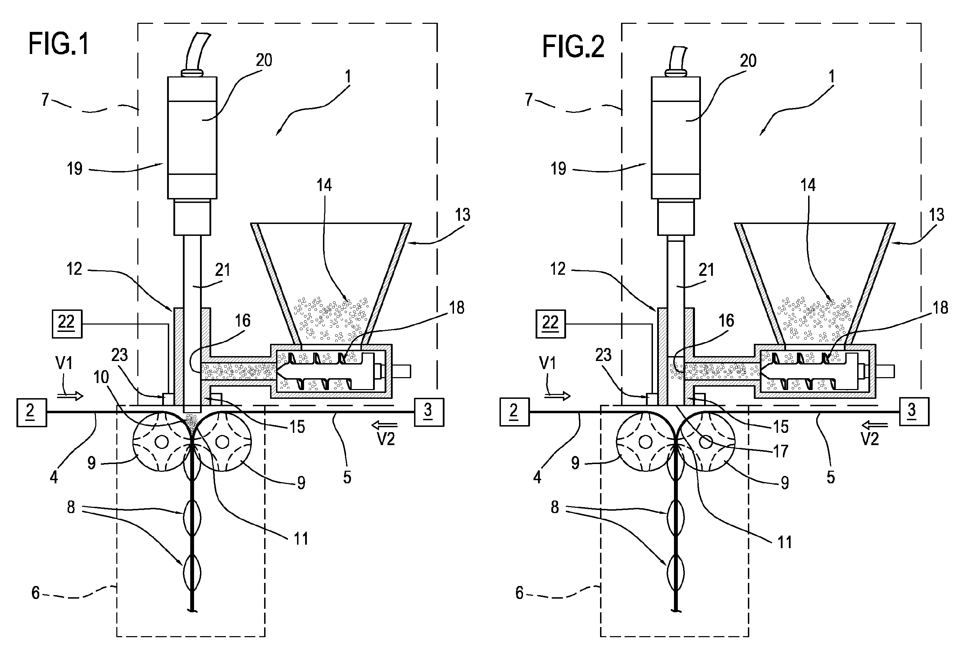

With reference to Figures 1 and 2, the numeral 1 denotes in its entirety a machine for making filled pasta, in particular used for making filled pasta of the type consisting of a shell made of pasta sheet in which a filling is inserted, such as tortellini, tortelloni or ravioli.

An example of a machine 1 is described in detail below, limited to the parts necessary for understanding this invention.

In the example embodiment illustrated, the machine 1 comprises a first station and a second station 2, 3 for preparing a respective strip 4, 5 of pasta sheet; each preparation station 2, 3 is schematically illustrated with a corresponding block.

The machine 1 comprises a pasta filling operation station schematically illustrated with a block 6 drawn with a dashed line, in communication with the stations 2 and 3.

The stations 2 and 3 comprise feed system, not illustrated, for moving, respectively, the strip 4 in direction V1 and the strip 5 in direction V2 towards the filling operation station 6.

The machine 1 comprises a station for preparing the filling, schematically illustrated with a corresponding block 7, in communication with the filling operation station 6.

The station 6 comprises a system for forming individual pieces 8 of filled pasta which in the example is schematically illustrated with a pair of wheels 9. The wheels 9 receive the above-mentioned strips 4, 5 and a dose or portion 10 of filling and, in the substantially known way, they form the pieces 8.

In practice, in the filling operation station 6, which is in communication with the stations 2, 3 for preparing the pasta sheet and with the station 7 for preparing the filling, the portions 10 of filling are wrapped in corresponding portions 11 of the strip of pasta sheet to form the individual pieces 8 of filled pasta.

The pieces 8 are then fed one after another, in a known way which is not described, to the machine 1 outfeed.

Looking in more detail at the station 7, it should be noticed that it comprises a feeder device 12 for feeding a food product, in particular the filling, to the filling operation station 6.

According to what is illustrated, the station 7 comprises a container 13, for example a hopper, into which the filling, labelled 14, is supplied.

The feeder device 12 comprises a feed duct 15, comprising an inlet 16 for the filling 14 and an outlet 17.

The inlet 16 is in communication with the container 13 from which it receives the filling 14, for example by means of a screw feeder 18 operating between an outfeed of the container 13 and the inlet 16 of the duct 15.

The feeder device 12 comprises movement means for moving the filling 14 operating inside the duct 15 for feeding the filling 14 from the inlet 16 towards the outlet 17.

In the example illustrated, the means for moving the filling 14 are an actuator 19, for example pneumatic, comprising a jacket 20 and a piston 21 movable between a position near to the jacket 20, illustrated in Figure 1, and a position distanced from the jacket 20, illustrated in Figure 2.

It should be noticed that the distanced position corresponds to a position of expulsion of the filling 14 from the duct 15 towards the filling operation station 6.

According to this invention, the feeder device 12 comprises an ultrasound generator, substantially known and schematically illustrated with a corresponding block 22, for generating vibrations, that is to say, low amplitude, high frequency oscillations, in the duct 15.

The ultrasound generator 22 comprises an ultrasound emitter, schematically illustrated with a block 23, which is applied to the duct 15 for transmitting a vibration to it.

The emitter 23 comprises a component which transmits the vibration to the duct 15, normally known as a "sonotrode".

In a preferred embodiment, the emitter 23, in particular the "sonotrode" is applied to the duct 15 at the outlet 17.

In a preferred embodiment, the emitter 23 is integrated in the duct 15, that is to say, the duct 15 comprises the ultrasound emitter 23.

In the preferred embodiment illustrated, the ultrasound emitter 23 delimits the outlet 17 of the duct 15.

More precisely, the end part of the duct 15 in which the outlet 15 is located is formed by the emitter 23, in particular by the "sonotrode".

In use, the ultrasound generator 22 triggers suitable vibrations at the outlet 17 of the duct 15, substantially preventing the filling from remaining attached to the duct 15.

The ultrasound waves generated by the generator 22 trigger the vibrations, guaranteeing the cleanness of the machine and precise dosing of the filling in the individual pieces of pasta.

Making the duct 15 directly integrated with the emitter 23 makes the machine particularly compact.

## Claims

1. A feeder device for feeding a food product (14) in a machine (1) for making filled pasta, said feeder device comprising
a feed duct (15) comprising an inlet (16) and an outlet (17) for the food product (14),
movement means (20, 21) operating in the feed duct (15) for feeding the food product (14) from the inlet (16) to the outlet (17),
said feeder device being **characterised in that** it comprises an ultrasound generator (22) provided with an ultrasound emitter (23) applied to the duct (15) for transmitting at least one vibration to the feed duct (15).

2. The feeder device according to claim 1, **characterised in that** the ultrasound emitter (23) is applied to the feed duct (15) at the outlet (17).

3. The feeder device according to claim 1 or 2, **characterised in that** the feed duct (15) comprises the ultrasound emitter (23).

4. The feeder device according to any one of the claims 1 to 3, **characterised in that** the ultrasound emitter (23) at least partly delimits the outlet (17) of the feed duct (15).

5. A machine for making filled pasta comprising at least one station (2, 3) for preparing a strip (4, 5) of pasta sheet;
a station (7) for preparing a filling (14, 10);
a filling operation station (6), in communication with the station (2, 3) for preparing a strip (4, 5) of pasta sheet and with the station (7) for preparing a filling (14, 10), in which portions (10) of filling are wrapped in corresponding portions (11) of the strip of pasta sheet to form individual pieces (8) of filled pasta, said station (7) for preparing a filling (14, 10) comprising a feeder device (12) for a food product for feeding said filling (14, 10) to the filling operation station (6), said machine being **characterised in that** the feeder device (12) is according to any one of the claims 1 to 4.

## Patentansprüche

1. Zuführvorrichtung zum Zuführen eines Nahrungsmittelprodukts (14) zu einer Maschine (1) zur Herstellung von gefüllten Teigwaren, wobei die Zuführvorrichtung eine Zuführleitung (15) umfasst, umfassend einen Einlass (16) und einen Auslass (17) für das Nahrungsmittelprodukt (14), Bewegungsmittel (20, 21), die in der Zuführleitung (15) zum Zuführen des Nahrungsmittelprodukts (14) vom Einlass (16) zum Auslass (17) arbeiten, wobei die Zuführvorrichtung **dadurch gekennzeichnet ist, dass** sie einen Ultraschallgenerator (22) umfasst, der mit einem Ultraschallemitter (23) versehen ist, der an der Leitung (15) angebracht ist, um mindestens eine Schwingung auf die Zuführleitung (15) zu übertragen.

2. Zuführvorrichtung nach Anspruch 1, **dadurch gekennzeichnet, dass** der Ultraschallemitter (23) an der Zuführleitung (15) am Auslass (17) angebracht ist.

3. Zuführvorrichtung nach Anspruch 1 oder 2, **dadurch gekennzeichnet, dass** die Zuführleitung (15) den Ultraschallemitter (23) umfasst.

4. Zuführvorrichtung nach einem der Ansprüche 1 bis 3, **dadurch gekennzeichnet, dass** der Ultraschallemitter (23) zumindest teilweise den Auslass (17) der Zuführleitung (15) begrenzt.

5. Maschine zur Herstellung von gefüllten Teigwaren, umfassend mindestens eine Station (2, 3) zum Vorbereiten eines Streifens (4, 5) einer Teigplatte, eine Station (7) zum Vorbereiten einer Füllung (14, 10), eine Füllstation (6) in Kommunikation mit der Station (2, 3) zum Vorbereiten eines Streifens (4, 5) einer Teigplatte und mit der Station (7) zum Vorbereiten einer Füllung (14, 10), in der Portionen (10) von Füllung in entsprechenden Portionen (11) des Streifens der Teigplatte eingewickelt werden, um individuelle Stücke (8) gefüllter Teigwaren zu formen, wobei die Station (7) zum Vorbereiten einer Füllung (14, 10) eine Zuführvorrichtung (12) für ein Nahrungsmittelprodukt zum Zuführen der Füllung (14, 10) zur Füllstation (6) umfasst, wobei die Maschine **dadurch gekennzeichnet ist, dass** die Zuführvorrichtung (12) nach einem der Ansprüche 1 bis 4 ausgebildet ist.

## Revendications

1. Dispositif d'alimentation pour alimenter par un produit alimentaire (14) une machine (1) de fabrication de pâtes farcies, ledit dispositif d'alimentation comprenant un conduit d'alimentation (15) comprenant une entrée (16) et une sortie (17) pour le produit alimentaire (14), des moyens de déplacement (20, 21) fonctionnant dans le conduit d'alimentation (15) pour alimenter le produit alimentaire (14) de l'entrée (16) vers la sortie (17), ledit dispositif d'alimentation étant **caractérisé en ce qu'**il comprend un générateur d'ultrasons (22) pourvu d'un émetteur d'ultrasons (23) appliqué au conduit (15) pour transmettre au moins une vibration au conduit d'alimentation (15).

2. Dispositif d'alimentation selon la revendication 1, **caractérisé en ce que** l'émetteur d'ultrasons (23) est appliqué au conduit d'alimentation (15) à la sortie (17).

3. Dispositif d'alimentation selon la revendication 1 ou 2, **caractérisé en ce que** le conduit d'alimentation (15) comprend l'émetteur d'ultrasons (23).

4. Dispositif d'alimentation selon l'une quelconque des revendications de 1 à 3, **caractérisé en ce que** l'émetteur d'ultrasons (23) délimite au moins partiellement la sortie (17) du conduit d'alimentation (15).

5. Machine de fabrication de pâtes farcies comprenant au moins un poste (2, 3) destiné à préparer une bande (4, 5) de pâte feuilletée ; un poste (7) destiné à préparer une farce (14, 10) ; un poste de remplissage (6), en communication avec le poste (2, 3) pour préparer une bande (4, 5) de pâte feuilletée et avec le poste (7) pour préparer une farce (14, 10), dans laquelle des portions (10) de farce sont enveloppées dans des portions correspondantes (11) de la bande de pâte feuilletée pour former des pièces individuelles (8) de pâtes farcies, ledit poste (7) servant à préparer une farce (14, 10) comprenant un dispositif d'alimentation (12) pour un produit alimentaire destiné à alimenter ladite farce (14, 10) au poste de remplissage (6), ladite machine étant **caractérisée en ce que** le dispositif d'alimentation (12) se présente selon l'une quelconque des revendications de 1 à 4.
